(19)

Europäisches
Patentamt
European
Patent Office
Office européen
des brevets

(11) **EP 2 312 334 A1**

(12) **EUROPEAN PATENT APPLICATION**

(43) Date of publication:
**20.04.2011 Bulletin 2011/16**

(51) Int Cl.:
**G01S 13/34** *(2006.01)* **G01S 13/74** *(2006.01)*

(21) Application number: **09173013.5**

(22) Date of filing: **14.10.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **Nederlandse Organisatie voor Toegepast -Natuurwetenschappelijk Onderzoek TNO 2628 VK Delft (NL)**

(72) Inventors:
• **Busking, Erik Bert**
 **2564 TK Den Haag (NL)**
• **Elferink, Franciscus Hedrikus**
 **2211 MR Noordwijkerhout (NL)**
• **van den Hoef, Frank Ernst Antoine**
 **2807 NG Gouda (NL)**

(74) Representative: **Hatzmann, Martin et al Vereenigde Johan de Wittlaan 7 2517 JR Den Haag (NL)**

(54) **Method for measuring the distance between tags**

(57) Method for measuring the distance between a terminal A and a terminal B, each terminal comprising an FMCW generator for generating a signal having a predetermined frequency to time function, a transmitter for transmitting a transmit signal comprising at least one cycle of the FMCW signal, a receiver for receiving a signal transmitted by the other terminal. The method comprises the following steps: terminal A transmits a transmit signal, which is received by the receiver of terminal B; terminal B shifts the received signal in frequency and/or in time such that the local signal has a predetermined frequency offset and/or time offset compared with the received signal; terminal B transmits the shifted signal, which is received by the receiver of terminal A; terminal A measures the frequency offset between its own transmit signal and the signal received from terminal B and calculates the distance between terminal A and terminal B from that measured frequency offset, taking into account said predetermined frequency and/or time offset performed in terminal B. Preferably, the transmit signal is constituted by alternating a transmit period, including n cycles of the signal generated by the FMCW generator, and a mute period corresponding with n cycles of that signal, n being at least 1.

FIG. 1

**Description**

The present invention refers to a method for measuring the distance between a tag A and a tag B, each comprising a generator for generating a signal having a predetermined frequency to time function, a transmitter for transmitting a transmit signal comprising at least one cycle of the generated signal, as well as a receiver for receiving a signal transmitted by the other tag.

One aim of the present invention is to provide accurate distance measurements.

Another aim is to enable distance measurements over relative large distances.

Yet another aim is to provide a network of active tags, enabling each tag (or its bearer) of location information.

The invention utilizes techniques which are known from FMCW radar, where a stable frequency signal, frequency modulated by e.g. a saw tooth of (other) triangular modulation signal, is transmitted. A signal reflected from a target object is mixed (multiplied) with the transmitted signal. The reflected signal received $t_e$ milliseconds later is mixed with a portion of the transmitted signal to produce a beat signal at a frequency $f_b$, which is proportional to the round-trip time $t_e$.

Tags may be used which are arranged to simply reflect incoming FMCW signals, received from an FMCW transceiver, back to their location of origin. Disadvantageous is the signal attenuation ratio due to a propagation loss ratio of $1/d^2$ over the path d between the transmitter and the tag This attenuation ration applies for both the path from the transceiver to the tag and, backwards, the (reflection) path from the tag to the transceiver, resulting in an attenuation ratio of $1/d^4$. By using tags which are provided with amplifiers, this attenuation could be compensated. In practice, however, due to among others problems arising from the large ratio between the power of the signal received by the tag and the power with which the tag transmits the amplified signal back to the radar transceiver, simply amplifying and sending back the received signal without any processing will not work. Such processing could comprise sending back the signal in another frequency band, not interfering with the frequency band of the received FMCW signal. Another option is to make use of different periods or time slots for sending from the radar transceiver to the tag and for sending from the tag to the radar transceiver. A tag which is arranged to transmit a "reflected" signal within a certain time slot will include a local generator for generating a recovered and amplified reflection signal towards the radar transceiver.

To be able to accurately measure the distance d between the radar transceiver and the tag, any (unknown) drift of the local FMCW generator (or oscillator) must be counteracted or compensated for by means of a synchronization step, which is included in the present invention. As it is presumed that the frequency sweep itself will not deviate substantially, synchronization will be defined hereinafter as shifting, e.g. in a digital signal processor, the locally generated signal and/or the received signal relative to each other (either signal may be shifted) in frequency and/or in time such that the local signal has a predetermined frequency offset and/or time offset compared with the received signal. The predetermined frequency offset and/or time offset may either be zero or may have another (predetermined) value. By doing so, the distance can be calculated accurately at the side of the radar transceiver, as the (previously unknown) drift of the local FMCW generator has been compensated by means of said synchronization step. This synchronization may be performed in an iterative process, achieving that, after synchronization, the local FMCW generator runs synchronously, having a predetermined time offset or frequency offset (equal to zero or having another predetermined value) with the beat of the received signal.

Hereinafter both the FMCW radar transceiver and the tag(s) will (also) be called terminals or tags, as both may be used in a symmetrical way, i.e. in a mutually equivalent way to another. Such terminals may be incorporated in a network wherein each of the terminals may communicate with each other while, besides, the will be able to measure accurately their mutual distances and, accordingly, their positions relative to another, which could make such system suitable for use in e.g. military operations, fire brigades, police etc.

In this specification and claims the notion FMCW (= Frequency Modulated Continuous Wave) is deemed to include PMCW (= Phase Modulated Continuous Wave). Also possible different signals having a predetermined frequency to time function are deemed to be included in the notion FMCW.

According to the invention it is preferred that the method for measuring the distance between a terminal A and a terminal B -each terminal comprising a generator for generating a local (FMCW) signal having a predetermined frequency to time function per cycle, a transmitter for transmitting a transmit signal comprising at least one cycle of the FMCW signal, and a receiver for receiving a signal transmitted by the other terminal- includes the following steps:

- terminal A transmits a transmit signal, which is received by the receiver of terminal B;
- terminal B shifts the local signal and/or the received signal in frequency and/or in time such that the local signal and the received signal have a predetermined frequency and/or time offset relative to each other;
- terminal B transmits the shifted signal, which is received by the receiver of terminal A;
- terminal A measures the frequency offset between its own transmit signal and the signal received from terminal B and calculates the distance between terminal A and terminal B from that measured frequency offset, taking into account said predetermined frequency and/or time offset performed in terminal B.

The predetermined frequency to time function of the FMCW signal may show a saw tooth shape (having one slope). However, it is preferred that said predetermined frequency to time function has a triangular ("zigzag") shape, having two opposite slopes, which offers the opportunity to compensate distance calculations for frequency drift.

The predetermined frequency offset may be zero. However, as a zero frequency offset is hardly to detect in practice, it is preferred that said predetermined frequency offset is unequal to zero, e.g. 2MHz, which can be easily detected. In the distance calculation the influence of this frequency offset is calculated back.

As in practical situations all kinds of unforeseen reflections may occur. For that reason it may be preferred to provide a predetermined time offset which e.g. corresponds to a distance offset of e.g. 10 meters. this predetermined time offset can easily be calculated back in the distance calculation.

It is preferred that the transmit signal is constituted by alternating a transmit period including n cycles of the signal generated by the FMCW generator and a mute period corresponding with n cycles of that signal, n being at least 1.

Hereinafter the invention will be discussed more in detail with reference to some figures.

Figure 1    illustrates two terminals and a synchronization action;

Figure 2    shows an exemplary embodiment of a terminal including synchronization means;

Figure 3    illustrates a preferred signal transmission scenario;

Figure 4    illustrates the use of a double sloped triangular FMCW signal.

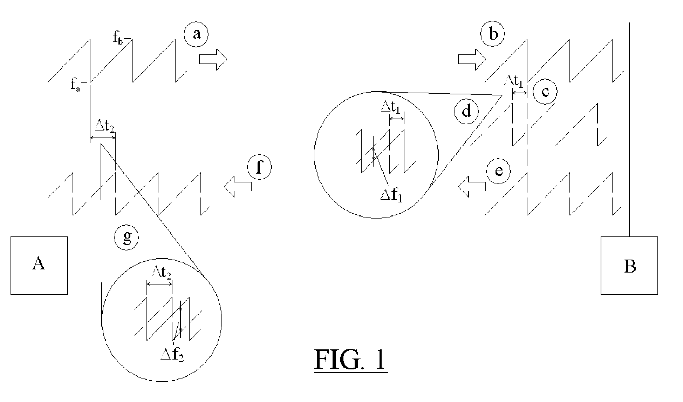

Figure 1 shows two terminals A and B, each including an antenna. An FMCW generator is provided for generating a signal having a predetermined frequency to time function, represented in figure 1 by an FMCW signal which lineary sweeps between a frequency $f_a$ and a frequency $f_b$ under control of an FMCW generator. Each terminal A, B comprises a transmitter for transmitting a transmit signal comprising the FMCW signal. The following steps are performed:

    a. terminal A sends an FMCW signal;
    b. the signal is received by terminal B;
    c. terminal B (continuously) generates a local FMCW signal;
    d. terminal B synchronizes the local signal to the received signal by shifting either the received signal or -preferably- the local signal in frequency and/or in time such that the local signal has a predetermined frequency offset and/or time offset compared with the received signal, which predetermined frequency offset and/or time offset, as in figure 1, may be zero;
    e. the local signal, i.e. the signal which was locally generated (c) in terminal B and synchronized (d) relative to the signal received (b) by terminal B from terminal A, the local signal is, after synchronization (d), transmitted by terminal B;
    f. this synchronized signal, transmitted by terminal B (e), is received by terminal A;
    g. the signal received by terminal A (f) is compared then with (a representative of) the originally sent signal and the distance between terminals A and B is calculated from (measured) $\Delta f_2$, i.e. the distance d between terminals A and B is

$$d \ [m] = \Delta t_2 \ [sec] * c \ [speed \ of \ light \ in \ msec^{-1}] \qquad [1]$$

As -common in FMCW based devices- the value of $\Delta f_2$ is measured in terminal A rather than the value of $\Delta t_2$, d is calculated by

$$d \ [m] = \Delta f_2 \ [sec^{-1}] * (df/dt)^{-1} \ [sec^2] * c \ [msec^{-1}] \qquad [2],$$

where df/dt represents the frequency sweep of the (saw tooth shaped) FMCW signal, i.e. the slope of the graphical representation of it, as shown in figure 1. When, in terminal B, the received FMCW signal is synchronized to the locally generated FMCW signal, viz. by shifting the received FMCW signal towards the "position" of the local FMCW signal, d (in formula [2]) represents the single distance between terminals A and B. When -as will be preferred-inversely, in terminal B the locally generated FMCW signal is shifted to become synchronous with the received signal, d (in formula [2]) represents the distance A - B - A; in other words d represents twice the distance A - B.

The predetermined frequency offset or time offset at synchronization (step d.) may be zero; it may, however, be preferred to set that offset to e.g. 2 MHz or a time value which corresponds (via the value of *c*) to e.g. 10 meters, which (predetermined) values are discounted in the calculation of the distance between terminals A and B. Such intentional deviation from zero has the advantage that the electronic circuitry works more properly when the frequency offset is unequal to zero, and, moreover, reflections of objects in the direct vicinity of terminals A and/or B will not or less disturb the interoperation of the terminals.

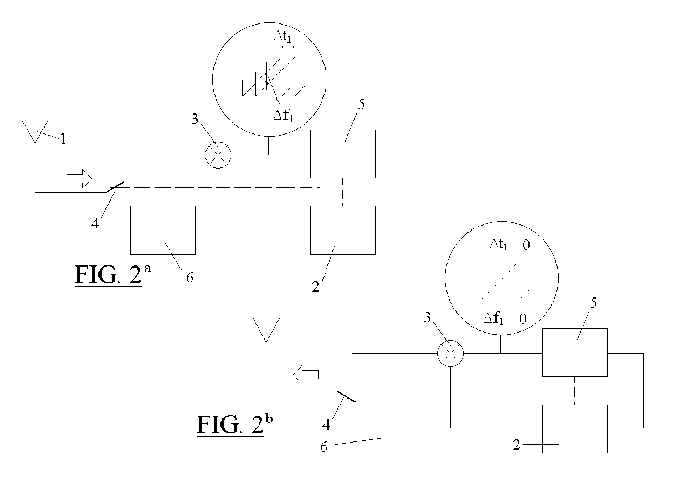

Figure 2 shows an exemplary embodiment of terminal B (terminals A and B, however, may have similar configurations) including synchronization means. An FMCW signal is received via an antenna 1 of terminal B. A generator 2 within terminal B generates a local FMCW signal. The received and locally generated signals are added in a mixer 3. The received signal is applied to the mixer 3 via a switch 4. Both the generator 2 and the switch 4 are controlled by a controller 5. The controller 5 detects the frequency difference $\Delta f_1$ or time difference $\Delta t_1$ between the received and locally generated signals. in an iterative process the controller 5 shifts the received signal in frequency and/or in time such that the local signal has a predetermined frequency offset and/or time offset compared with the received signal, which offset may be equal to zero of have another predetermined value. As soon as both FMCW signal thus have been synchronized the switch 4 may be turned over, causing that the synchronized FMCW signal is fed to the antenna 1, via an amplifier 6.

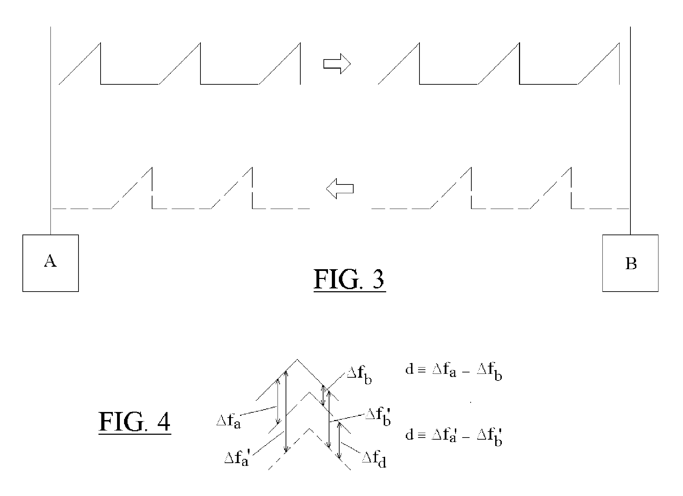

Figure 3 shows that, preferably, the terminals A and B are arranged so that the transmit signal of each terminal is constituted by an alternating transmit period, including n cycles of the signal generated by the FMCW generator of terminal A and B respectively, and a mute period corresponding with n cycles of that signal, n being at least 1. In figure 3 n = 1. So, terminal A and terminal B send their FMCW cycles (n = 1 in figure 3) in an alternately way. In this way each terminal A and B is able to receive n cycles, synchronize it and switch over ( see switch 4 in figure 4) transmit the synchronized FMCW cycle(s), without interference.

The predetermined frequency to time function of the FMCW signal may show a saw tooth shape (having one slope), as shown in figures 1 - 3. However, it is preferred that said predetermined frequency to time function has a triangular ("zigzag") shape, having two opposite slopes, which offers the opportunity to compensate distance calculations for frequency drift, as can be seen in figure 4. In figure 4 shows one cycle of a double sloped triangular FMCW signal, i.e. -from top to bottom- a received FMCW signal, a locally generated FMCW signal and a locally generated FMCW signal having a frequency drift $\Delta f_d$. The distance d is calculated from the values of $\Delta f_a$ and $\Delta f_b$: d ≡ $\Delta f_a$ - $\Delta f_b$. Due to the frequency drift $\Delta f_d$ $\Delta f_a$ may have become $\Delta f_a$' and $\Delta f_b$ $\Delta f_b$'. As easily can seen in figure 4, the frequency drift $\Delta f_d$, however, does not affect the value of d, as de value of $\Delta f_a$ - $\Delta f_b$ is equal to the value of $\Delta f_a$' - $\Delta f_b$'. Due to this a doubled sloped triangular FMCW form is advantageous over a single sloped, saw tooth shaped FMCW signal form.

## Claims

1. Method for measuring the distance between a terminal A and a terminal B, each terminal comprising

    - a generator arranged for generating a signal having a predetermined frequency to time function, called FMCW generator and FMCW signal respectively hereinafter;
    - a transmitter for transmitting a transmit signal comprising at least one cycle of the FMCW signal,
    - a receiver for receiving a signal transmitted by the other terminal;

    the method comprising the following steps:

    - terminal A transmits a transmit signal, which is received by the receiver of terminal B;
    - terminal B shifts the local signal and/or the received signal in frequency and/or in time such that the local signal has a predetermined frequency offset and/or time offset compared with the received signal;
    - terminal B transmits the shifted signal, which is received by the receiver of terminal A;
    - terminal A measures the frequency offset between its own transmit signal and the signal received from terminal B and calculates the distance between terminal A and terminal B from that measured frequency offset, taking into account said predetermined frequency and/or time offset performed in terminal B.

2. Method according to claim 1, wherein said predetermined frequency to time function has a triangular shape.

3. Method according to claim 1, wherein said predetermined frequency offset is zero.

4. Method according to claim 1, wherein said predetermined frequency offset has a value unequal to zero.

5. Method according to claim 1, wherein said predetermined time offset corresponds to a distance offset having a value unequal to zero.

**6.** Method according to claim 1, wherein the transmit signal is constituted by alternating a transmit period, including n cycles of the signal generated by the FMCW generator, with a mute period corresponding with n cycles of that signal, n being at least 1.

FIG. 1

$\Delta t_1$

$\Delta f_1$

3

5

1

4

FIG. 2$^a$

6

2

$\Delta t_1 = 0$

$\Delta f_1 = 0$

3

5

4

FIG. 2$^b$

6

2

## FIG. 3

## FIG. 4

$$d \equiv \Delta f_a - \Delta f_b$$

$$d \equiv \Delta f_a' - \Delta f_b'$$

Europäisches
Patentamt
European
Patent Office
Office européen
des brevets

# EUROPEAN SEARCH REPORT

Application Number

EP 09 17 3013

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 1 219 410 A (STANDARD TELEPHONES CABLES LTD [GB]) 13 January 1971 (1971-01-13) * page 1, lines 66-78 * * page 2, lines 87-103 * ----- | 1-6 | INV. G01S13/34 G01S13/74 |
| X | US 5 442 357 A (DOCHI TOHRU [JP]) 15 August 1995 (1995-08-15) * column 6, lines 40-62 * ----- | 1-3 | |

TECHNICAL FIELDS
SEARCHED (IPC)

G01S

The present search report has been drawn up for all claims

| Place of search | Date of completion of the search | Examiner |
|---|---|---|
| The Hague | 29 April 2010 | Shaalan, Mohamed |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 17 3013

This annex lists the patent family members relating to the patent documents cited in the above-mentioned European search report.
The members are as contained in the European Patent Office EDP file on
The European Patent Office is in no way liable for these particulars which are merely given for the purpose of information.

29-04-2010

| Patent document cited in search report | | Publication date | Patent family member(s) | | Publication date |
|---|---|---|---|---|---|
| GB 1219410 | A | 13-01-1971 | NONE | | |
| US 5442357 | A | 15-08-1995 | EP | 0617297 A2 | 28-09-1994 |
| | | | JP | 6281734 A | 07-10-1994 |
| | | | NO | 940571 A | 26-09-1994 |

EPO FORM P0459

For more details about this annex : see Official Journal of the European Patent Office, No. 12/82